# EUROPÄISCHE PATENTSCHRIFT

(11) **EP 2 702 289 B1**
(45) Veröffentlichungstag und Bekanntmachung des Hinweises auf die Patenterteilung: **26.08.2015**
(21) Anmeldenummer: 12727242.5
(22) Anmeldetag: 29.03.2012
(51) Int. Cl.: F16D 13/75

(54) **ENTKOPPLUNGSVERFAHREN UND ENTKOPPLUNGSANORDNUNG FÜR EINE REIBBELAG-NACHSTELLEINRICHTUNG EINER REIBUNGSKUPPLUNG**
DECOUPLING METHOD AND DECOUPLING ARRANGEMENT FOR A FRICTION LINING READJUSTMENT OF A FRICTION CLUTCH
PROCÉDÉ DE DÉSACCOUPLEMENT ET SYSTÈME DE DÉSACCOUPLEMENT POUR UN DISPOSITIF DE RÉGLAGE DE GARNITURE DE FRICTION D'UN EMBRAYAGE À FRICTION

(30) Priorität: 28.04.2011 DE 102011018891
(43) Veröffentlichungstag der Anmeldung: 05.03.2014
(73) Patentinhaber: Schaeffler Technologies AG & Co. KG, 91074 Herzogenaurach (DE)
(72) Erfinder: SCHNEIDER, Michael, 76534 Baden-Baden (DE)
(86) Internationale Anmeldenummer: PCT/DE2012/000330
(87) Internationale Veröffentlichungsnummer: WO 2012/146222

(56) Entgegenhaltungen:
- DE-A1-102010 008 439
- DE-A1-102010 025 330
- DE-A1-102010 034 810
- DE-A1-102010 035 121
- DE-A1-102010 045 791

## Beschreibung

Die Erfindung betrifft ein Verfahren zum Entkoppeln der Position eines Verstellrings zum Ausgleich von Verschleiß der Reibbeläge einer Reibungskupplung von der Position einer Antriebsklinke zum Detektieren des Verschleißes während einer Montage der Reibungskupplung, wobei die Antriebsklinke den Verstellring gleichzeitig über einen Spindeltrieb antreibt, der eine Spindel, eine auf der Spindel angeordnete Spindelmutter zur Kraft-und/oder Drehmomentübertragung auf den Verstellring und ein Ritzel aufweist, mittels dessen die Antriebsklinke die Spindel verdreht. Die Erfindung betrifft weiterhin eine Anordnung zur Entkopplung der Position eines Verstellrings einer Nachstelleinrichtung zum Ausgleich von Verschleiß der Reibbeläge einer Reibungskupplung von der Position einer Antriebsklinke zum Detektieren des Verschleißes während einer Montage der Reibungskupplung, wobei die Antriebsklinke den Verstellring gleichzeitig über einen Spindeltrieb antreibt, der eine Spindel, eine auf der Spindel angeordnete Spindelmutter zur Kraft-und/oder Drehmomentübertragung auf den Verstellring und ein in Wirkeingriff mit der Antriebsklinke stehendes Ritzel zum Verdrehen der Spindel aufweist. Schließlich betrifft die Erfindung noch eine entsprechende Nachstelleinrichtung.

Eine Nachstelleinrichtung für eine Reibungskupplung sowie die Funktionsweise der Reibungskupplung und deren Nachstelleinrichtung aus der DE 10 2008 051 100 A1 und DE10 2010 035121 A1 bekannt. Um einen axialen Verschleiß der Reibbeläge sowie andere gleichgeartete, einen axialen Fehlabstand zwischen Gegendruckplatte und Anpressplatte verursachende Effekte ausgleichen zu können und damit die Tellerfeder über Lebensdauer in derselben, kraftoptimierten Position wie Anstellung zwischen Anpressplatte und Kupplungsgehäuse betreiben zu können, wird ein zwischen der Tellerfeder und der Anpressplatte angeordneter, mit komplementären, in Umfangsrichtung ausgerichteten Gegenrampen korrespondierender Rampen versehener Verstellring verdreht, bis der Fehlabstand ausgeglichen ist. Dabei wird der Verstellring im Verschleißfall mittels eines Spindeltriebs verdreht, wobei die Spindel ein Ritzel aufweist, in das nach erkanntem Verschleiß eine gehäuseseitig am Kupplungsgehäuse angeordnete Antriebsklinke formschlüssig eingreift und während einer Betätigungsbewegung der Anpressplatte gegenüber dem Kupplungsgehäuse den Spindeltrieb mit Ritzel, Spindel, auf der Spindel angeordneter Spindelmutter und über diese Spindelmutter den Verstellring verdreht. Ein Verschleiß wird dabei erkannt, indem bei dem durch den Fehlabstand vergrößerten Betätigungsweg die ansonsten auf einer Außenverzahnung des Ritzels gleitende Antriebsklinke in die Außenverzahnung formschlüssig einschnappt.

Es hat sich gezeigt, dass während der Montage des Kupplungsgehäuses mit der Anpressplatte am Schwungrad die Anpressplatte in ihre Betriebslage gedrückt wird. Hierbei wird die Anpressplatte entgegen der Wirkung der Tellerfeder gegen die Reibbeläge gepresst, sodass der Verstellring durch die Anpresskraft der Tellerfeder stark geklemmt wird und durch die Nachstelleinrichtung nicht verdreht werden kann. Gleichzeitig greift während dieser Montage durch die Bewegung der Anpressplatte gegenüber dem Kupplungsgehäuse die Antriebsklinke in das Ritzel ein, so dass die mechanischen Elemente der kinematischen Kette beginnend bei der Antriebsklinke über das Ritzel, den Spindeltrieb bis zum Verstellring Schaden nehmen können.

Um derartige Beschädigungen während der Montage zu vermeiden kann zum Beispiel ein elastisches Zwischenelement zwischen Spindelmutter und angetriebenem Verstellring vorgesehen werden, das eine sichere Montage erlaubt. Dieses Zwischenelement wäre dann die Entkopplungsanordnung oder zumindest ein Teil der Entkopplungsanordnung.

Es ist Aufgabe der Erfindung ein alternatives simples aber effektives Verfahren und eine alternative simple aber effektive Anordnung zur Entkopplung eines Verstellrings von einer den Verschleiß detektierenden Antriebsklinke anzugeben.

Die Lösung der Aufgabe erfolgt erfindungsgemäß durch ein Verfahren mit den Merkmalen des Anspruchs 1, eine Anordnung mit den Merkmalen des Anspruchs 6 und eine Nachstelleinrichtung mit den Merkmalen des Anspruchs 10.

Bei dem erfindungsgemäßen Verfahren ist vorgesehen, dass die drehfeste Verbindung zwischen Ritzel und Spindel zumindest bei der Montage ein Spiel bezüglich der Drehbewegung aufweist, wobei dieses Spiel bei der Montage zum Angleichen der Winkelposition des Ritzels zur Position der Spindelmutter genutzt wird. Ein Spiel hat gegenüber einem elastischen Zwischenelement den Vorteil, dass sich kein schwingfähiges System ausbilden kann, da das Spiel keine rücktreibende Kraft hervorruft.

Prinzipiell können das Ritzel und die Spindel auch nach der Montage noch ein Spiel aufweisen. Mit Vorteil ist jedoch vorgesehen, dass das Ritzel nach der Montage mit der Spindel spielfrei drehfest verbunden wird. Dies kann separat geschehen, zum Beispiel durch manuelles fixieren, oder durch die Aufnahme des Betriebs der Reibungskupplung beziehungsweise der Nachstelleinrichtung.

Gemäß einer bevorzugten Ausführungsform der Erfindung ist das Ritzel mit der Spindel durch Aufschrauben des Ritzels auf die Spindel bis zu einem Endanschlag spielfrei drehfest verbindbar, wobei das Ritzel zur Entkopplung nur bis in eine zum Endanschlag beabstandete Position auf die Spindel aufgeschraubt wird. Durch diesen Abstand ergibt sich das Spiel zwischen dem Ritzel und der Spindel bezüglich der Drehbewegung gegeneinander. Dieses Spiel wird genutzt um den Verstellring bei der Montage gängig zu halten.

Gemäß einer weiteren bevorzugten Ausführungsform der Erfindung ist vorgesehen, dass der Abstand A zwischen einer dem Endanschlag zugewandten Flanke des Ritzels und dem Endanschlag der Spindel vor der Montage mindestens so groß ist, wie ein Ganghöheanteil, der einem Winkel zwischen zwei benachbarten Zähnen des Ritzels entspricht. Hat das Ritzel zum Beispiel 32 Zähne, so ist der Abstand A mindestens so groß wie 1/32 der Ganghöhe G eines entsprechenden Gewindes (A ≥ 1/32 G).

Gemäß einer weiteren bevorzugten Ausgestaltung der Erfindung ist vorgesehen, dass das Ritzel nach der Montage durch Festdrehen bis an den Endanschlag mit der Spindel spielfrei drehfest verbunden wird. Dies kann -wie bereits erwähnt- separat geschehen, zum Beispiel- , durch manuelles fixieren, aber auch durch den Betrieb der Reibungskupplung beziehungsweise der Nachstelleinrichtung.

Dabei ist insbesondere vorgesehen, dass das Festdrehen durch die erste Betätigung der Kupplung oder durch die ersten Betätigungen der Kupplung erfolgt.

Bei der erfindungsgemäßen Anordnung ist vorgesehen, dass die Anordnung das Ritzel und die Spindel aufweist, wobei zwischen Ritzel und Spindel ein Spiel bezüglich der Drehung vorhanden ist. Es ergibt sich somit eine Hysterese bezüglich der Drehmitnahme der Spindel durch das Ritzel. Die Anordnung ist insbesondere eine Anordnung zur Durchführung des vorstehend genannten Verfahrens. Die erfindungsgemäße Anordnung mit Spiel hat gegenüber einer Anordnung mit elastischem Zwischenelement den Vorteil, dass sich kein schwingfähiges System ausbilden kann, da das Spiel keine rücktreibende Kraft hervorruft.

Gemäß einer bevorzugten Ausgestaltung der Erfindung ist die Anordnung als spindeltriebinterne Anordnung ausgebildet. Sie wird somit vollständig von Elementen des Spindeltriebs gebildet.

Gemäß einer weiteren bevorzugten Ausgestaltung der Erfindung ist das Ritzel durch Aufschrauben auf die Spindel bis zu einem Endanschlag spielfrei drehfest mit der Spindel verbindbar, wobei das Ritzel zur Entkopplung nur bis zu einer zum Endanschlag beabstandeten Position auf der Spindel aufgeschraubt ist. Weiterhin ist mit Vorteil vorgesehen, dass der Abstand zwischen einer dem Endanschlag zugewandten Flanke des Ritzels und dem Endanschlag der Spindel bei der Montage mindestens so groß ist, wie ein Ganghöheanteil, der einem Winkel zwischen zwei benachbarten Zähnen des Ritzels entspricht.

Die erfindungsgemäße Nachstelleinrichtung für eine Reibungskupplung weist einen Verstellring, einen Spindeltrieb und eine Antriebsklinke auf. Der Verstellring ist zwischen einer Tellerfeder der Reibungskupplung und einer Anpressplatte angeordnet und mittels des an der Anpressplatte mittels eines Spindelhalters aufgenommenen Spindeltriebs verdrehbar, wobei der Spindeltrieb eine Spindel, eine auf der Spindel angeordnete Spindelmutter zur Kraft- und/oder Drehmomentübertragung auf den Verstellring und ein Ritzel aufweist, über das die Spindel von der Antriebsklinke antreibbar ist. Der Spindeltrieb bildet weiterhin eine vorstehen genannte Entkopplungsanordnung aus.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine Seitenansicht eines Spindeltriebs mit einer Entkopplungsanordnung gemäß einer ersten bevorzugten Ausführungsform der Erfindung,
- Fig. 2:: eine Ansicht auf das Kopfende des in Fig. 1 gezeigten Spindeltriebs mit einem Ritzel und einer Antriebsklinke und
- Fig. 3:: eine Detailansicht der Anordnung innerhalb des in den Fig. 1 und 2 gezeigten Spindeltriebs.

Zur Verdeutlichung möglicher konstruktiver Ausführungsformen von Reibungskupplungen mit Nachstelleinrichtungen nebst deren Wirkungsweisen sei auf die DE 10 2008 051 100 A1 verwiesen.

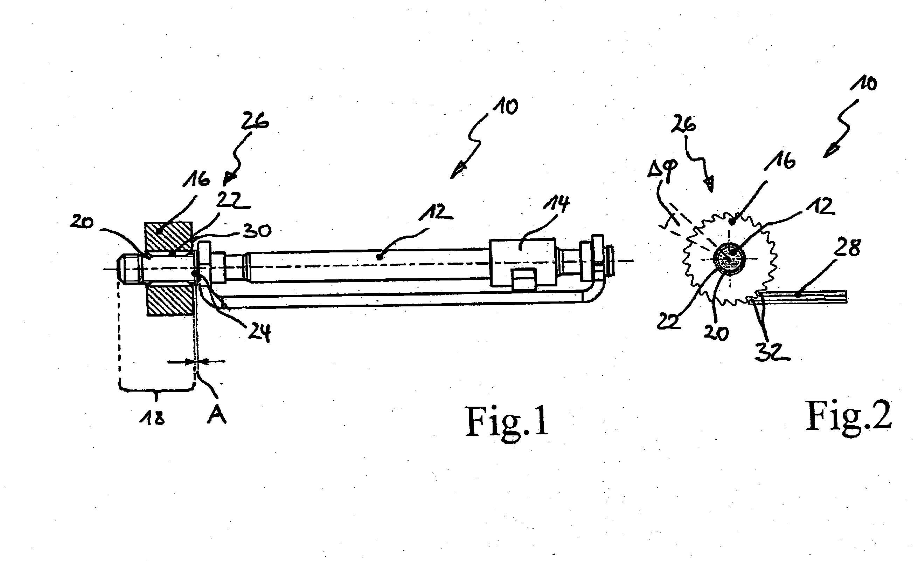

Die Nachstelleinrichtung weist zum Beispiel einen in Fig. 1 gezeigten Spindeltrieb 10 auf, der eine Spindel 12, eine auf der Spindel 12 angeordnete Spindelmutter 14 und ein Ritzel 16 umfasst. Die Spindel 12 weist an ihrem einen Endabschnitt 18 ein Außengewinde 20 auf, auf das das Ritzel 16 mit seinem als Durchgangsgewinde ausgebildeten Innengewinde 22 aufgeschraubt ist. Das Außengewinde 20 endet an einem (End-)Anschlag 24, der den Endabschnitt 18 mit dem Außengewinde 20 von dem restlichen Teil der Spindel 12 trennt. In einem Abschnitt dieses restlichen Teils ist die Spindelmutter 14 an der Spindel 12 angeordnet.

Das Ritzel 16, die Spindel 12 und ein Spiel bezüglich der Drehung zwischen Ritzel 16 und Spindel 12 bilden eine Entkopplungsanordnung 26 zur Entkopplung der Position des Verstellrings der Nachstelleinrichtung von der Position einer zum Detektieren (Sensieren) des Verschleißes und zum Antrieb des Verstellrings mittels des Spindeltriebs 10 genutzten Antriebsklinke 28. Zur Gewährleistung des Spiels und somit der Entkopplungsfunktion ist das Ritzel 16 nur bis in eine zum Endanschlag 24 beabstandete Position auf das Außengewinde 20 der Spindel 12 aufgeschraubt. Der entsprechende Abstand A zwischen einer dem Endanschlag 24 zugewandten Flanke 30 des Ritzels 16 und dem Endanschlag 24 ist vor der Montage so groß, wie ein Ganghöheanteil der Gewinde 20, 22, der einem Spiel des Ritzels 16 gegenüber der Spindel 12 von beispielsweise Δϕ = 20° entspricht.

Es ergibt sich folgende Funktion dieses Spiels Δϕ: Während der Montage des Kupplungsgehäuses mit der Anpressplatte am Schwungrad wird die Anpressplatte in ihre Betriebslage gedrückt. Hierbei wird die Anpressplatte entgegen der Wirkung der Tellerfeder gegen die Reibbeläge gepresst, sodass der Verstellring durch die Anpresskraft der Tellerfeder stark geklemmt wird und durch die Nachstelleinrichtung nicht verdreht werden kann. Ist die Klemmkraft auf den Verstellring oberhalb einer kritischen Schwelle, so kann das Ritzel 16 ohne eine Ausgleichsmöglichkeit nicht verdreht werden. Gleichzeitig greift jedoch während der Montage durch die Bewegung der Anpressplatte gegenüber dem Kupplungsgehäuse die Antriebsklinke 28 in das Ritzel 16 ein, so dass die Elementanordnung der miteinander starr wechselwirkenden mechanischen Elemente Antriebsklinke 28, Ritzel 16, Spindel 12, Spindelmutter 14 und Verstellring ohne eine hinreichend große Ausgleichsmöglichkeit zwischen zumindest zwei dieser Elemente Schaden nehmen können. Diese Ausgleichsmöglichkeit wird durch das Spiel (den Leerweg) zwischen, Ritzel 16 und Spindel 12 beschaffen

Prinzipiell kann das Spiel zwischen Ritzel 16 und Spindel 12 bei den unterschiedlichsten Arten von Drehmitnahmen verwirklicht werden, unter anderem auch bei Kraft- und/oder Formschluss über Schlüsselflächen zwischen Ritzel 16 und Spindel 12.

Die in den Figuren 1 bis 3 gezeigte Realisierung der Entkopplungsanordnung besteht darin, dass die Drehmitnahme zwischen Ritzel 16 und Spindel 12 nicht über Schlüsselflächen erfolgt, sondern über die Gewinde 20, 22. Ist ein Abstand A zwischen Ritzel 16 und Anschlag 24 der Spindel 12 eingestellt, kann das Ritzel 16 gegenüber der Spindel 12 in Nachstellrichtung verdreht werden, ohne dass die Spindel 12 mitverdreht wird. Ist das Ritzel 16 bis zum Anschlag 24 auf der Spindel 12 "aufgeschraubt", so liegt die Flanke 30 am Endanschlag 24 an und bei anschließender Verdrehung des Ritzels 16 wird die Spindel 12 mitverdreht. Ritzel 16 und Spindel 12 sind in diesem Zustand spielfrei drehfest miteinander verbunden. Dieses Aufschrauben bis zum Anschlag nach der Montage kann manuell oder durch den Betrieb der Nachstelleinrichtung verwirklicht werden.

Durch das Spiel Δϕ zwischen Ritzel 16 und Spindel 12 zum Zeitpunkt der Montage wird gewährleistet, dass die Relativbewegung zwischen Antriebsklinke 28 und Ritzel 16 beim Aufschrauben auf das Schwungrad (bei Verschiebung der Anpressplatte von Transportlage in den Betriebspunkt) nicht zu einer ungewollten Verstellringverdrehung führt. Stattdessen wird lediglich das Ritzel 16 verdreht ohne dabei jedoch die Spindel 12 zu verdrehen.

Ist nach der Montage noch Spiel vorhanden, wird dieses bei beginnender Betätigung der Kupplung aufgebraucht und anschließend die Spindel 12 mit dem Ritzel 16 mitverdreht.

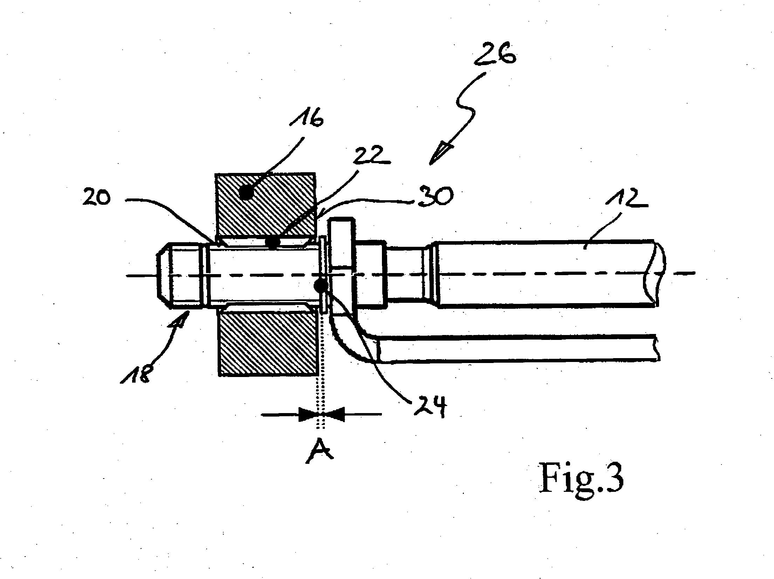

Die Fig. 2 zeigt den Eingriff der Antriebsklinke 28 in die Außenverzahnung 32 des Ritzels 16 sowie die Verbindung zwischen Spindel 12 und Ritzel 16 mittels ihrer Gewinde 20, 22. Weiterhin ist das über die Ganghöhe der Gewinde 20, 22 mit dem in den Fig. 1 und 3 gezeigten Abstand A zwischen der dem Endanschlag 24 zugewandten Flanke 30 des Ritzels 16 und dem Endanschlag 24 verbundene Spiel Δϕ eingezeichnet.

Die Fig. 3 zeigt eine Detailansicht der Anordnung 26 innerhalb des in den Fig. 1 und 2 gezeigten Spindeltriebs 10 mit dem Abstand A zwischen dem auf das Außengewinde 20 aufgeschraubten Ritzel 16 und dem Endanschlag 24 der Spindel 12.

Zur vollständigen Beschreibung der (als Ganzes nicht gezeigten) Nachstelleinrichtung der Reibungskupplung wird deren Funktionsweise im Folgenden noch einmal kurz skizziert. Um einen axialen Verschleiß von Reibbelägen der Kupplung sowie andere gleichgeartete, einen axialen Fehlabstand zwischen Gegendruckplatte und Anpressplatte verursachende Effekte, wie beispielsweise Setzverluste, ausgleichen zu können und damit die Tellerfeder über Lebensdauer in derselben, kraftoptimierten Position wie Anstellung zwischen Anpressplatte und Kupplungsgehäuse betreiben zu können, wird eine zwischen der Tellerfeder und der Anpressplatte angeordneter Verstellring (Rampenring) verdreht, bis der Fehlabstand ausgeglichen ist. Dieser Verstellring ist mit komplementären, in Umfangsrichtung ausgerichteten Gegenrampen korrespondierender Rampen versehen. Im Verschleißfall wird dieser Ring mittels des Spindeltriebs 10 verdreht.

Dazu greift nach erkanntem Verschleiß die gehäuseseitig am Kupplungsgehäuse angeordnete Antriebsklinke 28 formschlüssig in die Außenverzahnung 32 des Ritzels 16 ein (in Fig.2 gezeigt). Während einer Betätigungsbewegung der Anpressplatte gegenüber dem Kupplungsgehäuse verdreht das Ritzel 16 und damit der Spindeltrieb 10 mittels der auf der Spindel 12 angeordneten Spindelmutter 14 den Verstellring. Ein Verschleiß wird dabei erkannt, indem bei dem durch den Fehlabstand vergrößerten Betätigungsweg die ansonsten auf einer Außenverzahnung des Ritzels 16 gleitende Antriebsklinke 28 in die Außenverzahnung formschlüssig einschnappt.

### Bezugszeichenliste

- 10: Spindeltrieb
- 12: Spindel
- 14: Spindelmutter
- 16: Ritzel
- 18: Endabschnitt
- 20: Außengewinde
- 22: Innengewinde
- 24: Endanschlag
- 26: Entkopplungsanordnung
- 28: Antriebsklinke
- 30: Flanke
- 32: Außenverzahnung

## Patentansprüche

1. Verfahren zum Entkoppeln der Position eines Verstellrings zum Ausgleich von Verschleiß der Reibbeläge einer Reibungskupplung von der Position einer Antriebsklinke (28) zum Detektieren des Verschleißes während einer Montage der Reibungskupplung, wobei die Antriebsklinke (28) den Verstellring gleichzeitig über einen Spindeltrieb (10) antreibt, der eine Spindel (12), eine auf der Spindel (12) angeordnete Spindelmutter (14) zur Kraftund/oder Drehmomentübertragung auf den Verstellring und ein Ritzel (16) aufweist, mittels dessen die Antriebsklinke (28) die Spindel (12) verdreht, **dadurch gekennzeichnet, dass** die Entkopplung durch ein Spiel (Δϕ) zwischen Ritzel (16) und Spindel (12) bezüglich dieser Drehung verwirklicht wird.

2. Verfahren nach Anspruch 1, **dadurch gekennzeichnet, dass** das Ritzel (16) mit der Spindel (12) durch Aufschrauben des Ritzels (16) auf die Spindel (12) bis zu einem Endanschlag (24) spielfrei drehfest verbindbar ist, wobei das Ritzel (16) zur Entkopplung nur bis in eine zum Endanschlag (24) beabstandete Position auf die Spindel (12) aufgeschraubt wird.

3. Verfahren nach Anspruch 2, **dadurch gekennzeichnet, dass** der Abstand (A) zwischen einer dem Endanschlag (24) zugewandten Flanke (30) des Ritzels (16) und dem Endanschlag (24) der Spindel (12) vor der Montage mindestens so groß ist, wie ein Ganghöheanteil, der einem Winkel zwischen zwei benachbarten Zähnen des Ritzels (16) entspricht.

4. Verfahren nach Anspruch 2 oder 3, **dadurch gekennzeichnet, dass** das Ritzel (16) nach der Montage durch Festdrehen bis an den Endanschlag (24) mit der Spindel (12) spielfrei drehfest verbunden wird.

5. Verfahren nach Anspruch 4, **dadurch gekennzeichnet, dass** das Festdrehen bis an den Endanschlag (24) durch die erste Betätigung oder die ersten Betätigungen der Reibungskupplung erfolgt.

6. Anordnung (26) zur Entkopplung der Position eines Verstellrings einer Nachstelleinrichtung zum Ausgleich von Verschleiß der Reibbeläge einer Reibungskupplung von der Position einer Antriebsklinke (28) zum Detektieren des Verschleißes während einer Montage der Reibungskupplung, insbesondere zur Durchführung des Verfahrens nach einem der Ansprüche 1 bis 5, wobei die Antriebsklinke (28) den Verstellring gleichzeitig über einen Spindeltrieb (10) antreibt, der eine Spindel (12), eine auf der Spindel (12) angeordnete Spindelmutter (14) zur Kraft- und/oder Drehmomentübertragung auf den Verstellring und ein in Wirkeingriff mit der Antriebsklinke (28) stehendes Ritzel (16) zum Verdrehen der Spindel (12) aufweist, **gekennzeichnet durch** das Ritzel (16), die Spindel (12) und ein Spiel (Δϕ) bezüglich der Drehung zwischen Ritzel (16) und Spindel (12).

7. Anordnung nach Anspruch 6, **dadurch gekennzeichnet, dass** die Anordnung als spindeltriebinterne Anordnung ausgebildet ist.

8. Anordnung nach Anspruch 6 oder 7, **dadurch gekennzeichnet, dass** das Ritzel (16) durch Aufschrauben auf die Spindel (12) bis zu einem Endanschlag (24) spielfrei drehfest mit der Spindel (12) verbindbar ist, wobei das Ritzel (16) zur Entkopplung nur bis zu einer zum Endanschlag (24) beabstandeten Position auf der Spindel (12) aufgeschraubt ist.

9. Anordnung nach einem der Ansprüche 6 bis 8, **dadurch gekennzeichnet, dass** der Abstand (A) zwischen einer dem Endanschlag (24) zugewandten Flanke (30) des Ritzels (16) und dem Endahschlag (24) der Spindel (12) bei der Montage mindestens so groß ist, wie ein Ganghöheanteil, der einem Winkel zwischen zwei benachbaren Zähnen des Ritzels (16) entspricht.

10. Nachstelleinrichtung für eine Reibungskupplung mit einem Verstellring, einem Spindeltrieb (10) und einer Antriebsklinke (28), wobei der Verstellring zwischen einer Tellerfeder der Reibungskupplung und einer Anpressplatte angeordnet ist und mittels des an der Anpressplatte mittels eines Spindelhalters aufgenommenen Spindeltriebs (10) verdrehbar ist, wobei der Spindeltrieb (10) eine Spindel (12), eine auf der Spindel (12) angeordnete Spindelmutter (14) zur Kraft- und/oder Drehmomentübertragung auf den Verstellring und ein Ritzel (16) aufweist, über das die Spindel (12) von der Antriebsklinke (28) antreibbar ist, **dadurch gekennzeichnet, dass** der Spindeltrieb (10) eine Anordnung (26) nach einem der Ansprüche 6 bis 9 ausbildet.

## Claims

1. Method for decoupling the position of an adjustment ring for compensating for wear of the friction linings of a friction clutch from the position of a drive pawl (28) for detecting the wear during mounting of the friction clutch, the drive pawl (28) at the same time driving the adjustment ring via a spindle drive (10) which has a spindle (12), a spindle nut (14) which is arranged on the spindle (12) for the transmission of force and/or torque to the adjustment ring, and a pinion (16), by means of which the drive pawl (28) rotates the spindle (12), **characterized in that** the decoupling is realized by way of a play (Δϕ) between the pinion (16) and the spindle (12) with regard to the said rotation.

2. Method according to Claim 1, **characterized in that** the pinion (16) can be connected in a rotationally fixed manner without play to the spindle (12) by way of the opinion (16) being screwed onto the spindle (12) as far as an end stop (24), the pinion (16) being screwed onto the spindle (12) for decoupling purposes only as far as into a position which is spaced apart from the end stop (24).

3. Method according to Claim 2, **characterized in that** the spacing (A) between a flank (30) of the pinion (16) which faces the end stop (24) and the end stop (24) of the spindle (12) is at least as great before mounting as a thread pitch proportion which corresponds to an angle between two adjacent teeth of the pinion (16).

4. Method according to Claim 2 or 3, **characterized in that** the pinion (16) is connected fixedly to the spindle (12) without play so as to rotate with it after mounting by way of being screwed fixedly as far as onto the end stop (24).

5. Method according to Claim 4, **characterized in that** the fixed screwing as far as onto the end stop (24) takes place by way of the first actuation or the first actuations of the friction clutch.

6. Arrangement (26) for decoupling the position of an adjustment ring of an adjusting device for compensating for wear of the friction linings of a friction clutch from the position of a drive pawl (28) for detecting the wear during mounting of the friction clutch, in particular for carrying out the method according to one of Claims 1 to 5, the drive pawl (28) at the same time driving the adjustment ring via a spindle drive (10) which has a spindle (12), a spindle nut (14) which is arranged on the spindle (12) for the transmission of force and/or torque to the adjustment ring, and a pinion (16) which is in active engagement with the drive pawl (28) for rotating the spindle (12), **characterized by** the pinion (16), the spindle (12) and a play (Δϕ) with regard to the rotation between the pinion (16) and the spindle (12).

7. Arrangement according to Claim 6, **characterized in that** the arrangement is configured as an internal arrangement within the spindle drive.

8. Arrangement according to Claim 6 or 7, **characterized in that** the pinion (16) can be connected fixedly without play to the spindle (12) so as to rotate with it by way of being screwed onto the spindle (12) as far as an end stop (24), the pinion (16) being screwed onto the spindle (12) for decoupling purposes only as far as a position which is spaced apart from the end stop (24).

9. Arrangement according to one of Claims 6 to 8, **characterized in that** the spacing (A) between a flank (30) of the pinion (16) which faces the end stop (24) and the end stop (24) of the spindle (12) is at least as great during mounting as a thread pitch proportion which corresponds to an angle between two adjacent teeth of the pinion (16).

10. Adjusting device for a friction clutch having an adjustment ring, a spindle drive (10) and a drive pawl (28), the adjustment ring being arranged between a disc spring of the friction clutch and a pressure plate and being rotatable by means of the spindle drive (10) which is received on the pressure plate by means of a spindle holder, the spindle drive (10) having a spindle (12), a spindle nut (14) which is arranged on the spindle (12) for the transmission of force and/or torque to the adjustment ring, and a pinion (16), via which the spindle (12) can be driven by the drive pawl (28), **characterized in that** the spindle drive (10) forms an arrangement (26) according to one of Claims 6 to 9.

## Revendications

1. Procédé de désaccouplement de la position d'une bague de réglage pour la compensation de l'usure des garnitures de friction d'un accouplement à friction de la position d'un cliquet d'entraînement (28) pour détecter l'usure pendant un montage de l'accouplement à friction, le cliquet d'entraînement (28) entraînant la bague de réglage simultanément par le biais d'un entraînement à broche (10) qui présente une broche (12), un écrou de broche (14) disposé sur la broche (12) pour le transfert de force et/ou de couple à la bague de réglage et un pignon (16), au moyen duquel le cliquet d'entraînement (28) fait tourner la broche (12), **caractérisé en ce que** le désaccouplement est effectué par un jeu (Δϕ) entre le pignon (16) et la broche (12) par rapport à cette rotation.

2. Procédé selon la revendication 1, **caractérisé en ce que** le pignon (16) peut être connecté de manière solidaire en rotation sans jeu à la brosse (12) par vissage du pignon (16) sur la broche (12) jusqu'à une butée de fin de course (24), le pignon (16) étant vissé sur la broche (12) en vue du désaccouplement seulement jusqu'à une position espacée par rapport à la butée de fin de course (24) .

3. Procédé selon la revendication 2, **caractérisé en ce que** la distance (A) entre un flanc (30) du pignon (16) tourné vers la butée de fin de course (24) et la butée de fin de course (24) de la broche (12) avant le montage est au moins aussi grande qu'une proportion de hauteur de pas qui correspond à un angle entre deux dents adjacentes du pignon (16).

4. Procédé selon la revendication 2 ou 3, **caractérisé en ce que** le pignon (16) après le montage est connecté de manière solidaire en rotation sans jeu à la broche (12) par vissage jusqu'à la butée de fin de course (24).

5. Procédé selon la revendication 4, **caractérisé en ce que** le vissage jusqu'à la butée de fin de course (24) s'effectue par le premier actionnement ou par les premiers actionnements de l'accouplement à friction.

6. Agencement (26) pour le désaccouplement de la position d'une bague de réglage pour la compensation de l'usure des garnitures de friction d'un accouplement à friction de la position d'un cliquet d'entraînement (28) pour détecter l'usure pendant un montage de l'accouplement à friction, en particulier pour mettre en oeuvre le procédé selon l'une quelconque des revendications 1 à 5, dans lequel le cliquet d'entraînement (28) entraîne simultanément la bague de réglage par le biais d'un entraînement à broche (10) qui présente une broche (12), un écrou de broche (14) disposé sur la broche (12) pour le transfert de force et/ou de couple à la bague de réglage et un pignon (16) en prise fonctionnelle avec le cliquet d'entraînement (28) pour faire tourner la broche (12), **caractérisé par** le pignon (16), la broche (12) et un jeu (Δϕ) par rapport à la rotation entre le pignon (16) la broche (12).

7. Agencement selon la revendication 6, **caractérisé en ce que** l'agencement est réalisé sous forme d'agencement interne à l'entraînement à broche.

8. Agencement selon la revendication 6 ou 7, **caractérisé en ce que** le pignon (16) peut être connecté de manière solidaire en rotation sans jeu à la broche (12) par vissage sur la broche (12) jusqu'à une butée de fin de course (24), le pignon (16) étant vissé sur la broche (12) en vue du désaccouplement seulement jusqu'à une position espacée par rapport à la butée de fin de course (24).

9. Agencement selon l'une quelconque des revendications 6 à 8, **caractérisé en ce que** la distance (A) entre un flanc (30) du pignon (16) tourné vers la butée de fin de course (24) et la butée de fin de course (24) de la broche (12) lors du montage est au moins aussi grande qu'une proportion de hauteur de pas qui correspond à un angle entre deux dents adjacentes du pignon (16).

10. Dispositif de rattrapage pour l'accouplement à friction comprenant une bague de réglage, un entraînement à broche (10) et un cliquet d'entraînement (28), la bague de réglage étant disposée entre un ressort Belleville de l'accouplement à friction et une plaque de pressage et pouvant tourner au moyen de l'entraînement à broche (10) reçu sur la plaque de pressage au moyen d'un dispositif de retenue de broche, l'entraînement à broche (10) présentant une broche (12), un écrou de broche (14) disposé sur la broche (12) pour le transfert de force et/ou de couple à la bague de réglage et un pignon (16), par le biais duquel la broche (12) peut être entraînée par le cliquet d'entraînement (28), **caractérisé en ce que** l'entraînement à broche (10) constitue un agencement (26) selon l'une quelconque des revendications 6 à 9.
